# FASCICULE DE BREVET EUROPEEN

(11) **EP 1 834 874 B1**
(45) Date de publication et mention de la délivrance du brevet: **08.09.2010**
(21) Numéro de dépôt: 07290260.4
(22) Date de dépôt: 02.03.2007
(51) Int. Cl.: B64C 25/24, B64C 9/16, B64C 9/22

(54) **Architecture de distribution de puissance pour actionnements en séquence d'éléments mobiles d'un aéronef**
Leistungsverteilungsaufbau zur sequenziellen Betätigung von beweglichen Elementen eines Luftschiffs
Power distributing architecture for sequential activation of mobile elements of an aircraft

(30) Priorité: 13.03.2006 FR 0602180
(43) Date de publication de la demande: 19.09.2007
(73) Titulaire: MESSIER-BUGATTI, 78140 Vélizy Villacoublay (FR)
(72) Inventeur: Garcia, Jean-Pierre, 31770 Colomiers (FR)
(74) Mandataire: Parzy, Benjamin Alain

(56) Documents cités:
- EP-A2- 1 099 630
- WO-A2-03/007454
- US-A- 5 612 579

## Description

L'invention concerne une architecture de distribution de puissance électrique particulièrement adaptée pour actionner en séquence des éléments mobiles d'un aéronef tels que des portes, des atterrisseurs ou des éléments hypersustentateurs.

### ARRIERE-PLAN DE L'INVENTION

Les éléments mobiles sont actionnés par des organes moteurs comportant un ou plusieurs actionneurs électromécaniques, qui comportent chacun au moins un moteur électrique. Voir, par exemple, le document US 5 612 579.

Il est connu d'associer à chaque actionneur électromécanique une électronique de puissance comportant un onduleur qui reçoit de la puissance électrique d'au moins un générateur de puissance électrique de l'aéronef et qui calibre cette puissance pour la fournir à l'actionneur électromécanique. L'électronique de puissance est soit intégrée dans l'actionneur électromécanique, soit disposée sur l'aéronef à proximité de l'actionneur électromécanique associé.

La présence d'électroniques de puissance dédiées pour chacun des actionneurs électromécaniques engendre une masse importante.

### OBJET DE L'INVENTION

L'invention a pour objet une architecture de distribution de puissance plus légère que les architectures connues, exploitant le fait que certains des éléments mobiles sont actionnés en séquence.

### BREVE DESCRIPTION DE L'INVENTION

En vue de la réalisation de ce but, on propose une architecture de distribution de puissance électrique spécialement adaptée pour actionner en séquence des éléments mobiles d'un aéronef tels que des portes, des atterrisseurs ou des éléments hypersustentateurs, lesdits éléments mobiles étant actionnés par des actionneurs électromécaniques alimentés en séquence à partir d'une puissance électrique fournie par au moins un bus de puissance électrique de l'aéronef. Selon l'invention, l'architecture comporte au moins un organe de distribution de puissance comportant :
- des moyens de calibration pour calibrer la puissance électrique provenant du bus de puissance de l'aéronef;
- et des moyens de commutation pour diriger sélectivement la puissance calibrée vers l'un ou l'autre des actionneurs électromécaniques de sorte que lesdits éléments mobiles soient actionnés en séquence.

On a en effet constaté que beaucoup d'éléments mobiles d'un aéronef sont en général actionnés en séquence. A un instant donné, seul l'actionneur électromécanique associé à l'élément mobile actionné nécessite donc de la puissance électrique. En mutualisant la distribution de puissance pour des éléments ne fonctionnant qu'en séquence, il est ainsi possible de se contenter d'un organe de distribution de puissance commun remplaçant une pluralité d'électroniques de puissance, ce qui permet un gain de masse important.

De préférence, les moyens de calibration comportent un onduleur associé à des moyens de son pilotage.

Dans un mode d'exécution, l'architecture comporte au moins deux organes de distribution de puissance, l'un au moins des éléments mobiles étant actionné par deux actionneurs qui sont chacun reliés à l'un des organes de distribution de puissance. En particulier, les deux organes de distribution de puissance sont alimentés par des bus de puissance distincts.

Dans un autre mode d'exécution, l'architecture comporte au moins deux organes de distribution de puissance, l'un au moins des éléments mobiles étant actionné par un seul actionneur agencé pour fonctionner soit avec l'un ou l'autre des organes de distribution de puissance, soit avec les deux simultanément. En particulier les deux organes de distribution de puissance sont alimentés par des bus de puissance distincts et/ou sont regroupés à proximité du ou des actionneurs reliés à ces deux organes de distribution.

Dans encore un autre mode d'exécution, l'architecture comporte trois groupements de deux organes de distribution de puissance, tels que:
- l'un des groupements est disposé à proximité d'un atterrisseur principal pour alimenter les actionneurs associés à cet atterrisseur principal et éventuellement d'autres actionneurs;
- l'un des groupements est disposé à proximité d'un autre atterrisseur principal pour alimenter les actionneurs associés à cet autre atterrisseur principal et éventuellement d'autres actionneurs;
- l'un des groupements est disposé à proximité d'un atterrisseur auxiliaire pour alimenter les actionneurs associés à cet atterrisseur auxiliaire et éventuellement d'autres actionneurs.

On pourra alors prévoir que les organes de distribution de puissance de l'un au moins des groupements disposés à proximité d'un atterrisseur principal est agencé pour alimenter un ou des actionneurs électromécaniques d'un système hypersustentateur équipant l'aéronef. En particulier, le système hypersustentateur comporte au moins deux actionneurs électromécaniques, l'un des actionneurs électromécaniques étant associé à l'un des organes de distribution de puissance de l'un des groupements disposés à proximité de l'un des atterrisseurs principaux, tandis que l'autre des actionneurs électromécaniques est associé à l'un des organes de distribution de puissance de l'autre des groupements disposés à proximité de l'un des atterrisseurs principaux, les deux organes de distribution de puissance concernés étant alimentés par des bus de puissance distincts.

On pourra aussi prévoir que le groupement d'organes de distribution de puissance disposé à proximité de l'atterrisseur auxiliaire est agencé pour alimenter également un actionneur électromécanique de porte cargo.

Avantageusement enfin, l'architecture comporte plusieurs organes de distribution de puissance tous identiques.

### BREVE DESCRIPTION DES DESSINS

L'invention sera mieux comprise à la lumière de la description qui suit en référence aux figures des dessins annexés parmi lesquelles :
- la figure 1 est une vue de dessus schématique d'un aéronef ;
- la figure 2 est une vue schématique d'une architecture de puissance selon l'invention appliquée à l'aéronef de la figure 1;
- les figures 3A à 3D sont des schémas de principe d'actionneurs redondés utilisables avec l'architecture de puissance selon l'invention.

### DESCRIPTION DETAILLEE DE L'INVENTION

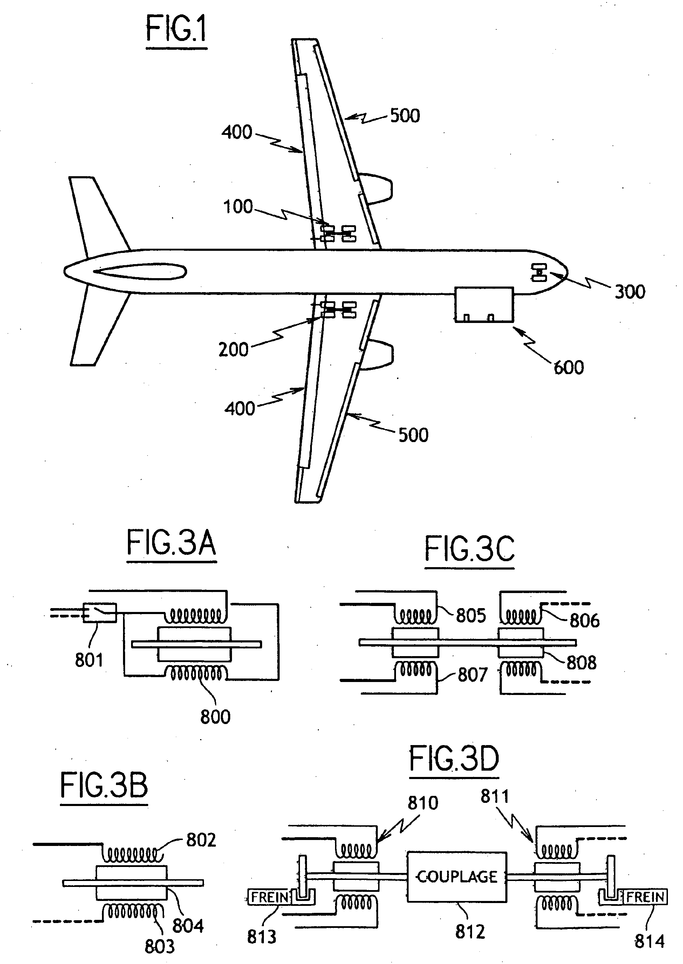

En référence à la figure 1, l'invention est ici décrite en application à un aéronef commercial ou militaire de transport. L'aéronef comporte divers systèmes à éléments mobiles, dont:
- un train d'atterrissage composé d'un atterrisseur principal gauche 100, d'un atterrisseur principal droit 200 et d'un atterrisseur auxiliaire 300;
- des dispositifs hypersustentateurs sous la forme de becs 400 et de volets 500;
- une porte cargo 600.

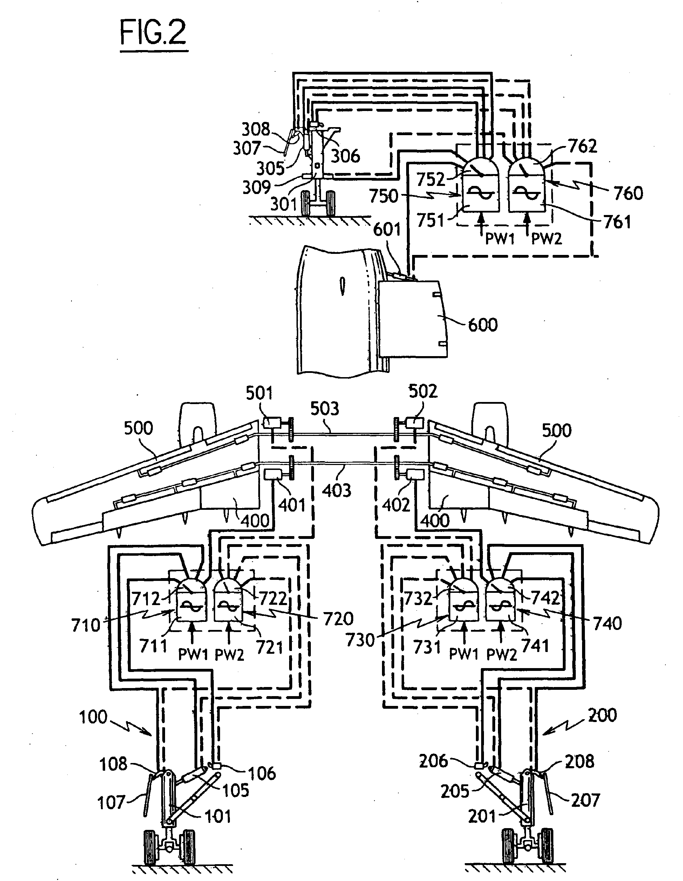

Comme cela est visible à la figure 2, l'atterrisseur principal gauche 100 se décompose en :
- l'atterrisseur 101 proprement dit, formant un élément qui est mobile entre une position rétractée et une position déployée illustrée ici, et manoeuvré par un actionneur électromécanique de relevage 105;
- un crochet de verrouillage 106 qui est mobile entre une position d'accrochage de l'atterrisseur en position rétractée et une position de libération, et manoeuvré par un actionneur électromécanique interne (non visible);
- une porte de soute 107 formant un élément qui est mobile entre une position fermée et une position ouverte, et manoeuvrée par un actionneur électromécanique 108;

De même, l'atterrisseur principal droit 200 se décompose en :
- l'atterrisseur 201 proprement dit, formant un élément qui est mobile entre une position rétractée et une position déployée illustrée ici, et manoeuvré par un actionneur électromécanique de relevage 205;
- un crochet de verrouillage 206 qui est mobile entre une position d'accrochage de l'atterrisseur en position rétractée et une position de libération, et manoeuvré par un actionneur électromécanique interne (non visible);
- une porte de soute 207 formant un élément qui est mobile entre une position fermée et une position ouverte, et manoeuvrée par un actionneur électromécanique 208.

Quant à l'atterrisseur auxiliaire 300, il se décompose en:
- l'atterrisseur auxiliaire 301 proprement dit, formant un élément qui est mobile entre une position rétractée et une position déployée illustrée ici, et manoeuvré par un actionneur électromécanique de relevage 305;
- un crochet de verrouillage 306 qui est mobile entre une position d'accrochage de l'atterrisseur en position rétractée et une position de libération, et manoeuvré par un actionneur électromécanique interne (non visible) ;
- une porte de soute 307 formant un élément qui est mobile entre une position fermée et une position ouverte, et manoeuvrée par un actionneur électromécanique 308;
- un organe d'orientation des roues de l'atterrisseur auxiliaire qui comporte un actionneur électromécanique 309.

Quant aux volets 400, ils sont mobiles entre une position rentrée et plusieurs positions déployées et sont actionnés par un actionneur électromécanique gauche 401 et un actionneur électromécanique droit 402, les deux actionneurs électromécaniques agissant sur les volets 400 via un arbre de transmission 403.

De même, les becs 500 sont mobiles entre une position rentrée et une position déployée et sont actionnés par un actionneur électromécanique gauche 501 et un actionneur électromécanique droit 502, les deux actionneurs électromécaniques agissant sur les becs 500 via un arbre de transmission 503.

Enfin, la porte cargo 600 est mobile entre une position fermée et une position ouverte illustrée ici et est actionnée par un actionneur électromécanique 601.

Il est possible de faire les constatations suivantes:
- l'actionneur électromécanique gauche 401 des volets 400 et l'actionneur électromécanique gauche 501 des becs 500 se trouvent physiquement à proximité de l'atterrisseur principal gauche 100 et des actionneurs électromécaniques associés;
- l'actionneur électromécanique droit 402 des volets 400 et l'actionneur électromécanique droit 502 des becs 500 se trouvent physiquement à proximité de l'atterrisseur principal droit 200 et des actionneurs électromécaniques associés;
- enfin, l'actionneur électromécanique 601 de la porte cargo 600 se trouve physiquement à proximité de l'atterrisseur auxiliaire 300 et des actionneurs électromécaniques associés.

Dans chacun des groupements ainsi mis en évidence, on constate que les actionneurs électromécaniques travaillent en séquence, et non simultanément.

Pour illustrer ce fait, il est utile de détailler l'exemple d'un atterrissage de l'aéronef. Lors d'un atterrissage, on commence par sortir un cran de volets 400, puis on ouvre les portes de soute 107,207,307 des atterrisseurs, puis on sort les atterrisseurs proprement dits 101,201,301, puis on sort les volets 400 jusqu'au dernier cran, puis on sort les becs 500. Après atterrissage, on actionne la commande d'orientation 309, et à l'arrêt de l'aéronef, on rentre les becs 500, puis les volets 400. Enfin, on ouvre la porte cargo 600.

Ainsi, aucun des actionneurs électromécaniques n'a travaillé simultanément, si ce n'est, bien naturellement, les deux actionneurs électromécaniques 401 et 402 des volets 400, et les deux actionneurs électromécaniques 501 et 502 des becs 500.

Selon encore une autre constatation, tous les actionneurs électromécaniques précités ont la même puissance, typiquement de l'ordre de quelques kilowatts sur un aéronef commercial. Par ailleurs, tous les systèmes concernés ont des criticités similaires. Tous ces systèmes, bien qu'importants pour l'exploitation, ne sont pas considérés comme critiques. Un aéronef peut atterrir sans becs ou sans volets, et si le système de déploiement de l'atterrisseur venait à défaillir, il existe des procédures de sortie secours, notamment par gravité.

L'invention vise à exploiter judicieusement l'actionnement en séquence, les regroupements physiques précités, et la similarité des puissances et des criticités des actionneurs électromécaniques ainsi regroupés, pour simplifier la distribution de la puissance électrique aux actionneurs électromécaniques.

Selon l'invention, l'aéronef est équipé de six organes de distribution de puissance, respectivement 710, 720, 730,740, 750 et 760. Chacun des organes de distribution de puissance comporte un moyen de calibration de puissance sous la forme d'un onduleur piloté, respectivement 711,721,731,741,751,761, ledit onduleur piloté servant à calibrer la puissance électrique provenant de l'un des bus de puissance PW1 ou PW2 de l'aéronef. Chacun des organes de distribution de puissance comporte un commutateur, respectivement 712,722,732,742,752,762 pour envoyer la puissance calibrée vers l'un ou l'autre des actionneurs.

Les organes de distribution de puissance sont regroupés physiquement par deux, à savoir un premier groupement composé des organes de distribution de puissance 710/720 qui est disposé à proximité de l'atterrisseur principal gauche 100,un deuxième groupement composé des organes de distribution de puissance 730/740 qui est disposé à proximité de l'atterrisseur principal droit 200, et enfin un troisième groupement composé des organes de distribution de puissance 750/760 qui est disposé à proximité de l'atterrisseur auxiliaire 300.

Les liaisons de puissance entre les organes de distribution de puissance et les actionneurs sont figurées sur la figure 2 soit en traits continus épais, soit en traits pointillés épais.

Plus précisément, l'organe de distribution de puissance 710, alimenté par le bus de puissance PW1, est relié :
- à l'actionneur électromécanique 108 de la porte de soute 107 ;
- à l'actionneur électromécanique 105 de l'atterrisseur gauche 101 ;
- à l'actionneur électromécanique du crochet 106; et
- à l'actionneur électromécanique gauche 401 des volets 400.

Un commutateur 712 associé envoie la puissance électrique calibrée par l'onduleur associé sélectivement à l'un des actionneurs électromécaniques cités ci-dessus. En effet, dans la liste des actionneurs électromécaniques reliés à l'organe de distribution de puissance 710, aucun des actionneurs électromécaniques ne fonctionne simultanément.

L'organe de distribution de puissance 720, alimenté par le bus de puissance PW2, est relié :
- à l'actionneur électromécanique 108 de la porte de soute 107 ;
- à l'actionneur électromécanique 105 de l'atterrisseur gauche 101;
- à l'actionneur électromécanique du crochet 106 ; et
- à l'actionneur électromécanique gauche 501 des becs 500.

Un commutateur 722 associé envoie la puissance électrique calibrée par l'onduleur associé sélectivement à l'un des actionneurs électromécaniques cités ci-dessus. En effet, dans la liste des actionneurs électromécaniques reliés à l'organe de distribution de puissance 720, aucun des actionneurs électromécaniques ne fonctionne simultanément.

De la même façon, l'organe de distribution de puissance 730, alimenté par le bus de puissance PW1, est relié:
- à l'actionneur électromécanique 208 de la porte de soute 207 ;
- à l'actionneur électromécanique 205 de l'atterrisseur droit 201;
- à l'actionneur électromécanique du crochet 206; et
- à l'actionneur électromécanique droit 502 des becs 500.

Un commutateur 732 associé envoie la puissance électrique calibrée par les onduleurs sélectivement à l'un des actionneurs électromécaniques cités ci-dessus. En effet, dans la liste des actionneurs électromécaniques reliés à l'organe de distribution de puissance 730, aucun des actionneurs électromécaniques ne fonctionne simultanément.

L'organe de distribution de puissance 740, alimenté par le bus de puissance PW2, est relié:
- à l'actionneur électromécanique 208 de la porte de soute 207;
- à l'actionneur électromécanique 205 de l'atterrisseur droit 201;
- à l'actionneur électromécanique du crochet 206; et
- à l'actionneur électromécanique droit 402 des volets 400.

Un commutateur 742 associé envoie la puissance électrique calibrée par l'onduleur associé sélectivement à l'un des actionneurs électromécaniques cités ci-dessus. En effet, dans la liste des actionneurs électromécaniques reliés à l'organe de distribution de puissance 740, aucun des actionneurs électromécaniques ne fonctionne simultanément.

Enfin, l'organe de distribution de puissance 750, alimenté par le bus de puissance PW1, est relié:
- à l'actionneur électromécanique 308 de la porte de soute 307;
- à l'actionneur électromécanique 305 de l'atterrisseur auxiliaire 301;
- à l'actionneur électromécanique du crochet 306; et aussi
- à l'actionneur électromécanique 601 de la porte cargo 600.

Un commutateur 752 associé envoie la puissance électrique calibrée par l'onduleur associé sélectivement à l'un des actionneurs électromécaniques cités ci-dessus. En effet, dans la liste des actionneurs électromécaniques reliés à l'organe de distribution de puissance 750, aucun des actionneurs électromécaniques ne fonctionne simultanément.

Quant à l'organe de distribution de puissance 760, alimenté par le bus de puissance PW2, il est relié:
- à l'actionneur électromécanique 308 de la porte de soute 307 ;
- à l'actionneur électromécanique 305 de l'atterrisseur auxiliaire 301 ;
- à l'actionneur électromécanique du crochet 306 ; et aussi
- à l'actionneur électromécanique 601 de la porte cargo 600.

Un commutateur 762 associé envoie la puissance électrique calibrée par l'onduleur associé sélectivement à l'un des actionneurs électromécaniques cités ci-dessus. En effet, dans la liste des actionneurs électromécaniques reliés à l'organe de distribution de puissance 760, aucun des actionneurs électromécaniques ne fonctionne simultanément.

Parmi tous les actionneurs électromécaniques précités, on peut distinguer deux catégories :
- les actionneurs qui ne sont reliés qu'à un seul organe de distribution de puissance, c'est-à-dire les actionneurs de volets 401,402 et les actionneurs de becs 501,502 ; et
- les actionneurs reliés à deux organes de distribution de puissance, c'est-à-dire tous les autres actionneurs.

On remarquera que les actionneurs électromécaniques de la première catégorie travaillent en parallèle, et fonctionnent donc simultanément, mais sont chacun reliés à un organe de distribution de puissance recevant sa puissance d'un bus d'alimentation distinct. Par exemple, concernant les volets 400, l'actionneur électromécanique 401 est associé à l'organe de distribution de puissance 710 qui est relié au bus de puissance PW1, tandis que l'actionneur électromécanique 402 est associé à l'organe de distribution de puissance 740 qui est relié au bus de puissance PW2. Ainsi, si l'un des bus de puissance, ou l'un des organes de distribution de puissance, ou encore l'un des actionneurs électromécaniques tombe en panne, il reste possible d'actionner les volets avec l'actionneur qui reste alimenté. Une simple panne ne suffit donc pas à perdre la commande d'actionnement des volets 400. De préférence, chacun des actionneurs 401,402 sera dimensionné pour fournir la moitié de la puissance nécessaire pour actionner l'élément mobile associé selon la performance spécifiée.

De même, concernant les becs 500, l'actionneur électromécanique 501 est associé à l'organe de distribution de puissance 720 qui est relié au bus de puissance PW2, tandis que l'actionneur électromécanique 502 est associé à l'organe de distribution de puissance 730 qui est relié au bus de puissance PW1. Ainsi, si l'un des bus de puissance, ou l'un des organes de distribution de puissance, ou encore l'un des actionneurs tombe en panne, il reste possible d'actionner les becs avec l'actionneur qui reste alimenté. Un simple panne ne suffit donc pas à perdre la commande d'actionnement des becs 500. De préférence, chacun des actionneurs 501,502 sera dimensionné pour fournir la moitié de la puissance nécessaire pour actionner l'élément mobile associé selon la performance spécifiée.

Quant aux actionneurs électromécaniques de la deuxième catégorie, ils sont selon l'invention pourvus de moyens de redondance, comme illustré sur les figures 3A à 3D.

A la figure 3A, l'actionneur électromécanique est pourvu d'un seul bobinage 800 alimenté au moyen d'un commutateur 801 par l'un ou par l'autre des organes de puissance associés. Le bobinage de l'actionneur électromécanique est donc dimensionné pour fournir la puissance nécessaire à l'actionnement de l'élément mobile associé selon la performance spécifiée.

A la figure 3B, l'actionneur électromécanique comporte deux bobinages 802 et 803 coopérant avec un même stator 804 , chacun des bobinages étant alimenté par l'un des organes de distribution de puissance. Les deux bobinages fonctionnent en parallèle, de sorte que chacun des bobinages est dimensionné pour fournir la moitié de la puissance nécessaire à l'actionnement de l'élément mobile associé selon la performance spécifiée.

A la figure 3C, l'actionneur électromécanique comporte deux bobinages 805 et 806 qui coopèrent respectivement avec des stators distincts 807 et 808, chacun des bobinages étant alimenté par l'un des organes de distribution de puissance. Les deux bobinages fonctionnent en parallèle, de sorte que chacun des bobinages est dimensionné pour fournir la moitié de la puissance nécessaire à l'actionnement de l'élément mobile associé selon la performance spécifiée.

Enfin, à la figure 3D, l'actionneur électromécanique comporte deux moteurs 810 et 811 comportant des bobinages alimentés respectivement par l'un ou l'autre des organes de distribution de puissance, lesdits moteurs étant associés par un organe de couplage 812 et possédant respectivement des freins 813 et 814, ce qui permet de doser la part de puissance fournie par l'un ou l'autre des moteurs sur l'arbre de sortie de l'actionneur. Les deux moteurs fonctionnent en parallèle, de sorte que chacun des moteurs est dimensionné pour fournir la moitié de la puissance nécessaire à l'actionnement de l'élément mobile associé selon la performance spécifiée.

Dans les différentes configurations illustrées à aux figures 3A à 3D, il est donc possible, si l'un des organes de puissance ou l'un des bus de puissance venait à défaillir, de continuer à actionner l'élément mobile associé. Dans le cas de l'actionneur électromécanique illustré à la figure 3A, l'actionnement se ferait avec la même puissance, tandis que dans le cas des actionneurs électromécaniques illustrés aux figures 3B à 3D, l'actionnement se ferait avec une puissance diminuée. Ainsi, bien que pour les actionneurs électromécaniques de la deuxième catégorie l'actionnement de l'élément mobile associé soit assuré par un seul actionneur, ce dernier comporte une structure qui permet néanmoins de continuer à assurer l'actionnement de l'élément mobile même en cas de défaillance d'un bus de puissance ou d'un organe de distribution de puissance. La redondance est ainsi assurée de façon interne à l'actionneur électromécanique.

Dans l'architecture de puissance proposée ici, tous les actionneurs électromécaniques sont donc redondés, soit de façon interne comme les actionneurs électromécaniques de la deuxième catégorie, soit par dédoublement comme c'est le cas pour les actionneurs de la première catégorie. Dans les deux cas, la perte d'un bus de puissance ou de l'un des organes de distribution de puissance ne suffit pas pour empêcher l'actionnement de l'élément mobile associé.

Ainsi, au lieu d'équiper chacun des actionneurs électromécaniques avec un onduleur et son électronique de pilotage, l'invention vise à mutualiser la distribution de puissance en proposant un organe de distribution de puissance commun pour un certain nombre d'actionneurs électromécaniques qui travaillent en séquence, l'organe de distribution de puissance étant équipé d'un commutateur pour diriger la puissance vers le ou les actionneurs électromécaniques nécessitant d'être alimentés. Une telle disposition permet de diminuer le nombre d'onduleurs, même si, pour des questions de disponibilité, les onduleurs ont été ici dédoublés.

L'invention est particulièrement intéressante lorsque l'on mutualise la distribution de puissance d'actionneurs électromécaniques ayant des puissances similaires, ce qui est le cas dans l'exemple présentement illustré. Cette disposition permet de concevoir des organes de distribution de puissance capables de délivrer une puissance nominale qui est compatible avec la puissance du plus important des actionneurs électromécaniques mutualisés, mais qui reste encore raisonnable par rapport à la puissance du plus faible des actionneurs électromécaniques mutualisés.

Il est à noter que cette mutualisation de la distribution de puissance pour des systèmes aussi divers que des portes, des atterrisseurs ou des systèmes hypersustentateurs va à l'encontre des pratiques habituelles en aéronautique où l'on a l'habitude de considérer lesdits systèmes de façon complètement séparée (par exemple les atterrisseurs ressortent du chapitre 32 de la classification de l'Air Transport Association, alors que les systèmes hypersustentateurs ressortent du chapitre 27), et d'en confier la maîtrise d'oeuvre à des équipementiers distincts, dont chacun est spécialiste de l'un des systèmes.

Ce n'est qu'en cas de défaillance des deux onduleurs que l'on perd toute possibilité d'actionnement des éléments mobiles par les actionneurs électromécaniques alimentés par l'organe de distribution de puissance défaillant, ce qui est extrêmement improbable. En outre, comme déjà indiqué, les atterrisseurs sont pourvus de moyens de sortie secours (par exemple par gravité) ne faisant pas appel à un tel actionnement.

On remarquera encore que tous les systèmes précités à éléments mobiles, à l'exception du système d'orientation des roues de l'atterrisseur auxiliaire 300, sont du type à asservissement en tout ou rien, avec arrêt en position d'arrivée, par exemple au moyen d'un ou plusieurs capteurs de fin de course. Concernant l'actionneur électromécanique d'orientation 309, il est le seul de tous les actionneurs électromécaniques mentionnés à ne pas être du type à asservissement en tout ou rien, car il est du type à asservissement continu en position.

Pour gérer ces deux types d'asservissement, il suffit de prévoir dans le ou les organes de distribution de puissance concernés des moyens de pilotage de l'onduleur pour doser la puissance au niveau requis, soit à un niveau constant pour les asservissements en tout ou rien, soit à un niveau continûment variable pour les asservissements continus.

De préférence, on prévoira des organes de distribution de puissance identiques, donc tous équipés de moyens de pilotage de l'onduleur, ce qui diminue le coût de l'architecture de puissance et en simplifie considérablement sa maintenance. Ainsi, même si l'un des organes de distribution de puissance n'est relié qu'à des actionneurs asservis en tout ou rien, l'organe de pilotage de l'onduleur associé permettra de délivrer à chacun des actionneurs une puissance certes constante, mais d'un niveau finement adapté à chacun des actionneurs, ce qui est générateur d'économie d'énergie.

L'invention n'est pas limitée à ce qui vient d'être décrit, mais bien au contraire englobe toute variante entrant dans le cadre défini par les revendications.

En particulier, bien que l'on ait prévu des groupements de deux organes de distribution de puissance qui fonctionnent simultanément, on pourra prévoir deux onduleurs ayant chacun une puissance unitaire égale à la puissance nominale, de sorte qu'à un instant donné, l'un seul des deux onduleurs fonctionne, l'autre onduleur n'intervenant que pour prendre le relais du premier onduleur en cas par exemple de défaillance.

En variante, on pourra se contenter d'un seul organe de distribution de puissance si la perte du seul onduleur reste acceptable du point de vue de la disponibilité de l'aéronef, ou au contraire, prévoir des groupements de plus de deux organes de distribution de puissance.

Bien que l'aéronef illustré comporte trois groupements de deux organes de distribution de puissance, ce qui permet de positionner lesdits organes de distribution de puissance au plus près des actionneurs électromécaniques associés, on pourra disposer un nombre quelconque d'organes de distribution de puissance, en fonction des actionneurs électromécaniques à alimenter. A la limite, l'aéronef pourrait ne comporter qu'un seul organe de distribution de puissance, adapté à alimenter tous les actionneurs électromécaniques concernés.

Enfin, bien que les systèmes concernés par la mutualisation des organes de puissance des actionneurs électromécaniques soient ici les atterrisseurs, les systèmes hypersustentateurs, et les éventuelles portes cargo, on pourra bien sûr englober d'autres systèmes, de préférence de puissance et de criticité similaires, comme par exemple les reverses des moteurs.

## Revendications

1. Architecture de distribution de puissance électrique spécialement adaptée pour actionner en séquence des éléments mobiles (101 ; 201 ; 301 ; 107 ; 207 ; 307 ; 400 ; 500 ; 600) d'un aéronef tels que des portes, des atterrisseurs ou des éléments hypersustentateurs, lesdits éléments mobiles étant actionnés par des actionneurs électromécaniques (105,108 ; 205,208 ; 305,308 ; 401,402 ; 501, 502 ; 601) alimentés en séquence à partir d'une puissance électrique fournie par au moins un bus de puissance électrique de l'aéronef (PW1,PW2),
oú l'architecture comporte au moins un organe de distribution de puissance (710, 720, ...760) comportent :
- des moyens de calibration (711, 721, ...761) pour calibrer la puissance électrique provenant du bus de puissance de l'aéronef;
**caractérisée en ce que** ledit organe de distribution de puissance (710, 720, 760) comporte des moyens de commutation (712, 722, ...762) pour diriger sélectivement la puissance électrique calibrée vers l'un ou l'autre des actionneurs électromécaniques de sorte que lesdits éléments mobiles soient actionnés en séquence.

2. Architecture selon la revendication 1, dans laquelle les moyens de calibration comportent un onduleur associé à des moyens de son pilotage.

3. Architecture selon la revendication 1, comportant au moins deux organes de distribution de puissance (710,740), l'un au moins des éléments mobiles étant actionné par deux actionneurs électromécaniques (401,402) qui sont chacun reliés à l'un des organes de distribution de puissance.

4. Architecture selon la revendication 3, dans laquelle les deux organes de distribution de puissance (710, 740) sont alimentés par des bus de puissance distincts (PW1,PW2).

5. Architecture selon la revendication 1, comportant au moins deux organes de distribution de puissance (710,720), l'un au moins des éléments mobiles étant actionné par un seul actionneur électromécanique agencé pour fonctionner soit avec l'un ou l'autre des organes de distribution de puissance, soit avec les deux simultanément.

6. Architecture selon la revendication 5, dans laquelle les deux organes de distribution de puissance (710, 720) sont alimentés par des bus de puissance distincts (PW1,PW2).

7. Architecture selon la revendication 5, dans laquelle les deux organes de distribution de puissance (710,720) sont regroupés à proximité du ou des actionneurs électromécaniques (105,108) reliés à ces deux organes de distribution.

8. Architecture selon la revendication 1, comportant trois groupements de deux organes de distribution de puissance, tels que:
- l'un des groupements (710/720) est disposé à proximité d'un atterrisseur principal (100) pour alimenter les actionneurs électromécaniques associés à cet atterrisseur principal et éventuellement d'autres actionneurs;
- l'un des groupements (730/740) est disposé à proximité d'un autre atterrisseur principal pour alimenter les actionneurs électromécaniques associés à cet autre atterrisseur principal et éventuellement d'autres actionneurs;
- l'un des groupements (750/760) est disposé à proximité d'un atterrisseur auxiliaire pour alimenter les actionneurs électromécaniques associés à cet atterrisseur auxiliaire et éventuellement d'autres actionneurs.

9. Architecture selon la revendication 8, dans laquelle les organes de distribution de puissance de l'un au moins des groupements disposés à proximité d'un atterrisseur principal sont agencés pour alimenter un ou des actionneurs électromécaniques d'un système hypersustentateur équipant l'aéronef.

10. Architecture selon la revendication 9, dans laquelle le système hypersustentateur comporte au moins deux actionneurs électromécaniques (401,402), l'un des actionneurs électromécaniques (401) étant associé à l'un des organes de distribution de puissance (710) de l'un des groupements (710/720) disposé à proximité de l'un des atterrisseurs principaux, tandis que l'autre des actionneurs électromécaniques (402) est associé à l'un des organes de distribution de puissance (740) de l'autre des groupements (730/740) disposé à proximité de l'autre des atterrisseurs principaux, les deux organes de distribution de puissance concernés étant alimentés par des bus de puissance distincts (PW1, PW2).

11. Architecture selon la revendication 8, dans laquelle le groupement d'organes de distribution de puissance (750/760) disposé à proximité de l'atterrisseur auxiliaire est agencé pour alimenter également un actionneur électromécanique (601) de porte cargo.

12. Architecture selon la revendication 1, comportant plusieurs organes de distribution de puissance tous identiques.

## Claims

1. An electrical power distribution architecture specially adapted for actuating in sequence aircraft moving elements (101; 201; 301; 107; 207; 307; 400; 500; 600) such as doors, undercarriages, or high-lift elements, said moving elements being actuated by electromechanical actuators (105, 108; 205, 208; 305, 308; 401, 402; 501, 502; 601) powered in sequence from electrical power delivered by at least one electrical power bus (PW1, PW2) of the aircraft,
the architecture comprising at least one power distribution member (710, 720, ..., 760) comprising calibrator means (711, 721, ..., 761) for calibrating the electrical power coming from the power supply bus of the aircraft;
**characterized in that** said power distribution member comprises switch means (712, 722, ..., 762) for selectively directing the calibrated electrical power to one or the other of the electromechanical actuators.

2. An architecture according to claim 1, in which the calibrator means comprise an inverter associated with means for controlling it.

3. An architecture according to claim 1, comprising at least two power distribution members (710, 740), at least one of the moving elements being actuated by two electromechanical actuators (401, 402) each connected to one of the power distribution members.

4. An architecture according to claim 3, in which the two power distribution members (710, 740) are powered by distinct power supply buses (PW1, PW2).

5. An architecture according to claim 1, comprising at least two power distribution members (710, 720), at least one of the moving elements being actuated by a single electromechanical actuator arranged to operate either with one or the other of the power distribution members, or else with both simultaneously.

6. An architecture according to claim 5, in which the two power distribution members (710, 720) are powered by distinct power supply buses (PW1, PW2).

7. An architecture according to claim 5, in which the two power distribution members (710, 720) are grouped together close to the electromechanical actuator(s) (105, 108) connected to said two distribution members.

8. An architecture according to claim 1, comprising three groups of two power distribution members each, such that:
· one of the groups (710 & 720) is disposed close to a main undercarriage (100) for powering the electromechanical actuators associated with said main undercarriage, and possibly other actuators;
· one of the groups (730 & 740) is disposed close to another main undercarriage to power the electromechanical actuators associated with said other main undercarriage, and possibly other actuators; and
· one of the groups (750 & 760) is disposed close to a nose undercarriage for powering the electromechanical actuators associated with said nose undercarriage, and possibly other actuators.

9. An architecture according to claim 8, in which the power distribution members of at least one of the groups disposed close to a main undercarriage are arranged to power one or more electromechanical actuators of a high-lift system fitted to the aircraft.

10. An architecture according to claim 9, in which the high-lift system includes at least two electromechanical actuators (401, 402), one of the electromechanical actuators (401) being associated with one of the power distribution members (710) of one of the groups (710 & 720) disposed close to one of the main undercarriages, while the other electromechanical actuator (402) is associated with one of the power distribution members (740) of the other of the groups (730 & 740) disposed close to the other main undercarriage, the two power distribution members concerned being powered by distinct power supply buses (PW1, PW2).

11. An architecture according to claim 8, in which the group of power distribution members (750 & 760) disposed close to the nose undercarriage is also arranged to power a cargo door electromechanical actuator (601).

12. An architecture according to claim 1, including a plurality of identical power distribution members.

## Patentansprüche

1. Anordnung zur Verteilung elektrischer Leistung, wobei die Anordnung insbesondere dazu geeignet ist, bewegliche Elemente (101; 201; 301; 107; 207; 307; 400; 500; 600) eines Flugzeugs, wie z. B. Türen, Fahrwerke oder Landeklappen, sequentiell zu betätigen, wobei die genannten beweglichen Elemente durch elektromechanische Aktuatoren (105, 108; 205, 208; 305, 308; 401, 402; 501, 502; 601) betätigt werden, die sequentiell mit einer elektrischen Leistung versorgt werden, die von mindestens einem Bus (PW1, PW2) des Flugzeugs für elektrische Leistung zugeführt wird, wobei die Anordnung mindestens ein Leistungsverteilungselement (710, 720, ...760) umfasst, welches umfasst:
- Kalibriermittel (711, 721, ...761) zum Kalibrieren der elektrischen Leistung, die aus dem Leistungsbus des Flugzeugs stammt,
**dadurch gekennzeichnet, dass** das genannte Leistungsverteilungselement (710, 720, 760) Umschaltmittel (712, 722, ...762) umfasst, um die kalibrierte elektrische Leistung selektiv zu dem einen oder dem anderen der elektromechanischen Aktuatoren zu leiten, derart, dass die genannten beweglichen Elemente sequentiell betätigt werden.

2. Anordnung nach Anspruch 1, wobei die Kalibriermittel einen Wechselrichter umfassen, der mit Mitteln für seine Steuerung verbunden ist.

3. Anordnung nach Anspruch 1, umfassend mindestens zwei Leistungsverteilungselemente (710, 740), wobei mindestens eines der beweglichen Elemente von zwei elektromechanischen Aktuatoren (401, 402) betätigt wird, die jeweils mit einem der Leistungsverteilungselemente verbunden sind.

4. Anordnung nach Anspruch 3, wobei die beiden Leistungsverteilungselemente (710, 740) von getrennten Leistungsbussen (PW1, PW2) versorgt werden.

5. Anordnung nach Anspruch 1, umfassend mindestens zwei Leistungsverteilungselemente (710, 720), wobei mindestens eines der beweglichen Elemente von einem einzigen elektromechanischen Aktuator betätigt wird, der so ausgebildet ist, dass er entweder mit dem einen oder dem anderen der Leistungsverteilungselemente oder mit beiden gleichzeitig funktioniert.

6. Anordnung nach Anspruch 5, wobei die beiden Leistungsverteilungselemente (710, 720) von getrennten Leistungsbussen (PW1, PW2) versorgt werden.

7. Anordnung nach Anspruch 5, wobei die beiden Leistungsverteilungselemente (710, 720) nahe des oder der elektromechanischen Aktuatoren (105, 108) gruppiert sind, die mit diesen beiden Verteilungselementen verbunden sind.

8. Anordnung nach Anspruch 1, umfassend drei Gruppen von zwei Leistungsverteilungselementen, als da sind:
- eine der Gruppen (710/720) ist nahe einem Hauptfahrwerk (100) angeordnet, um die elektromechanischen Aktuatoren, die mit diesem Hauptfahrwerk verbunden sind, und möglicherweise weitere Aktuatoren zu versorgen,
- eine der Gruppen (730/740) ist nahe einem weiteren Hauptfahrwerk angeordnet, um die elektromechanischen Aktuatoren, die mit diesem weiteren Hauptfahrwerk verbunden sind, und möglicherweise weitere Aktuatoren zu versorgen,
- eine der Gruppen (750/760) ist nahe einem Hilfsfahrwerk angeordnet, um die elektromechanischen Aktuatoren, die mit diesem Hilfsfahrwerk verbunden sind, und möglicherweise weitere Aktuatoren zu versorgen.

9. Anordnung nach Anspruch 8, wobei die Leistungsverteilungselemente mindestens einer der Gruppen, die nahe einem Hauptfahrwerk angeordnet sind, derart ausgebildet sind, dass sie einen oder mehr elektromechanische Aktuatoren eines Landeklappensystems versorgen, mit dem das Flugzeug ausgerüstet ist.

10. Anordnung nach Anspruch 9, wobei das Landeklappensystem mindestens zwei elektromechanische Aktuatoren (401, 402) umfasst, wobei einer der elektromechanischen Aktuatoren (401) mit einem der Leistungsverteilungselemente (710) einer der Gruppen (710/720) verbunden ist, die nahe einem der Hauptfahrwerke angeordnet ist, während der andere der elektromechanischen Aktuatoren (402) mit einem der Leistungsverteilungselemente (740) der anderen der Gruppen (730/740) verbunden ist, die nahe dem anderen der Hauptfahrwerke angeordnet ist, wobei die beiden betreffenden Leistungsverteilungselemente von getrennten Leistungsbussen (PW1, PW2) versorgt werden.

11. Anordnung nach Anspruch 8, wobei die Gruppe der Leistungsverteilungselemente (750/760), die nahe dem Hilfsfahrwerk angeordnet ist, derart ausgebildet ist, dass sie ebenso einen elektromechanischen Aktuator (601) der Frachttür versorgt.

12. Anordnung nach Anspruch 1, umfassend mehrere Leistungsverteilungselemente, die alle identisch sind.
